Europäisches Patentamt

European Patent Office

Office européen des brevets

(19)

(11) **EP 1 483 203 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
*C01B 33/14* (2006.01)      *C09C 1/28* (2006.01)
*C09C 3/00* (2006.01)      *C01B 13/32* (2006.01)
*C01B 33/113* (2006.01)

(21) Anmeldenummer: 03708174.2

(22) Anmeldetag: **04.03.2003**

(86) Internationale Anmeldenummer:
**PCT/EP2003/002198**

(87) Internationale Veröffentlichungsnummer:
**WO 2003/074420 (12.09.2003 Gazette 2003/37)**

(54) **MODIFIZIERTE OXIDISCHE NANO-PARTIKEL MIT HYDROPHOBEN EINSCHLÜSSEN, VERFAHREN ZU IHRER HERSTELLUNG UND VERWENDUNG DIESER PARTIKEL**

MODIFIED OXIDIC NANO-PARTICLE WITH HYDROPHOBIC INCLUSIONS, METHOD FOR THE PRODUCTION AND USE OF SAID PARTICLE

NANOPARTICULES OXYDIQUES MODIFIEES POURVUES D'INCLUSIONS HYDROPHOBES, PROCEDES DE PRODUCTION ET D'UTILISATION DESDITES PARTICULES

(84) Benannte Vertragsstaaten:
**AT BE BG CH CY CZ DE DK EE ES FI FR GB GR HU IE IT LI LU MC NL PT RO SE SI SK TR**

(30) Priorität: **06.03.2002 DE 10209744**

(43) Veröffentlichungstag der Anmeldung:
**08.12.2004 Patentblatt 2004/50**

(73) Patentinhaber:
• **Roche Diagnostics GmbH**
  **68305 Mannheim (DE)**
  Benannte Vertragsstaaten:
  **DE**
• **Fraunhofer-Gesellschaft zur Förderung der angewandten Forschung e.V.**
  **80636 München (DE)**
• **F. HOFFMANN-LA ROCHE AG**
  **4070 Basel (CH)**
  Benannte Vertragsstaaten:
  **AT BE BG CH CY CZ DK EE ES FI FR GB GR HU IE IT LI LU MC NL PT RO SE SI SK TR**

(72) Erfinder:
• **GEIGER, Albert**
  **82377 Penzberg (DE)**
• **GRIEBEL, Dragan**
  **97070 Würzburg (DE)**
• **HERRMANN, Rupert**
  **82362 Weilheim (DE)**
• **KUERZINGER, Konrad**
  **82377 Penzberg (DE)**

(74) Vertreter: **Knauer, Martin et al**
**Roche Diagnostics GmbH**
**Patent Department**
**68298 Mannheim (DE)**

(56) Entgegenhaltungen:
**DE-A- 10 163 646          US-A1- 2003 032 681**

**EP 1 483 203 B1**

**Beschreibung**

Die Erfindung betrifft Verfahren zur Herstellung modifizierter metall-oxidischer Nano-Partikel mit hydrophoben Einschlüssen, insbesondere von Metalloxid-Partikeln, welche halogen-haltige Zielmoleküle enthalten, die so hergestellten Partikel und deren Verwendung, insbesondere als Toner, als Sonnenschutzmittel, als Insektizide oder zur Markierung von Biomolekülen.

Latexpartikel sind hydrophob und als Host für hydrophobe Moleküle sehr geeignet und im Einsatz, Kawaguchi, H., Prog. Polym. Sci. 25 (2000) 1171-1210. Organische in Wasser dispergierte Nano-Partikel finden zwar in der Pharmazie, in der Kosmetik, im Pflanzenschutz und in der Ernährung immer mehr Anwendung, jedoch sind beispielsweise Lösungsmittelreste noch vorhanden, die sich auf die jeweiligen Anwendungen nachteilig auswirken können. Zu dieser Problematik finden z.Z. intensive Forschungen statt, Horn, D., and Rieger, J., Angew. Chem. 113 (2001) 4460-4492.

Da die Metalloxid-Partikel auf nasschemischen Weg in einem Wasser-Ethanolgemisch synthetisiert werden, enthalten sie naturgemäß keine störenden Tenside, Stabilisatoren, usw. Zusätzlich ist eine multifunktionelle Oberfläche vorhanden, die je nach Anforderung modifiziert werden kann - sei es beispielsweise mit Carboxylfunktionalitäten (als Biolinker) oder Fluororganylgruppen (zur Beeinflussung der physikalisch-chemischen Oberffächeneigenschaften). Metalloxid-Partikel sind naturgemäß hydrophil und eignen sich daher nicht als Host für hydrophobe Moleküle.

Nano-Partikel auf Silikatbasis, welche mit hydrophilen Farbstoffen gefärbt sind, sind im Stand der Technik seit langem bekannt. Sie werden in Form von Pigmenten beispielsweise als Färbemittel für Toner und Tinten, für Plastikmaterialien und auch als Markierungs- und Trägermaterialen im medizinisch-technischen Bereich eingesetzt.

Großtechnisch werden Silikatpartikel meist durch Flammenhydrolyse (z.B. Aerosil®) hergestellt. Solchermaßen gewonnene Silikatpartikel können an ihrer Oberfläche oder schichtweise gefärbt werden.

In US 5,102,763 wird die Verwendung von hydrophilen, gefärbten $SiO_2$-Partikeln für den Einsatz als Toner beschrieben. Diese Partikel werden durch Umsetzung von voraktivierten Silikatpartikeln mit diversen Farbstoffen an der Oberfläche kovalent gefärbt.

In der WO 93/10190 wird die Herstellung von gefärbten Partikeln durch eine kovalente Anbindung eines Farbstoffes an die Oberfläche von Partikeln beschrieben.

Die nur an der Oberfläche gefärbten Silkat-Partikel neigen dazu, durch Abbluten Farbe zu verlieren. Dadurch verringert sich die Farbintensität und diese Patikel sind oft auch nicht mehr gleichmäßig gefärbt. Die Anwendung dieser Partikel für die Herstellung von Konjugaten, die für die Diagnostik geeignet sind, wird nicht beschrieben.

Im US-Patent 5,209,998 wird ein Verfahren zur Herstellung von gefärbten Partikeln mit einer Silikatoberfläche beschrieben. Das Herstellverfahren basiert auf dem Beschichten farbiger Pigmente mit einer Silikat-Hülle. Diese Partikel sind also nur in ihrem Kern gefärbt. Als Anwendung wird der Einsatz der Partikel in elektrostatischen Tonern, Plastikmaterialien und Tinten beschrieben; eine diagnostische Anwendung wird nicht offenbart.

Ein Verfahren zur Herstellung monodisperser Silikatpartikel, d.h. Silikatpartikeln, die von einheitlicher Größe sind, ist das Sol-Gel-Verfahren. Es wurde erstmals von Stöber, et al.beschrieben (Colloid J. Interface Sci. 26 (1968) 62-69). Die Herstellung der sogenannten Stöber-Partikel und ihre Eigenschaften wurden in der Folgezeit durch eine Vielzahl von Arbeitsgruppen eingehend untersucht. Hierzu gehören die Festlegung der Synthesebedingungen zum Erhalt bestimmter Partikelgrößen (Van Helden, et al, Colloid J. Interface Sci. 81 (1981) 354-68, Giesche, H., J. European Ceramic Soc. 14 (1994) 189-204, Van Blaaderen, A., and Vrij, A., Adv. Chem. Ser. 234 (1994) 83-111) sowie Untersuchungen zum Partikelwachstum und der chemischen Zusammensetzung (Byers, C. H., et al., Ind. Eng. Chem. Res. 26 (1987) 1916-1923; Matsoukas, T., and Goulari, E., Colloid J. Interface Sci. 124 (1988) 252-261; Harris, T., et al., J. Non-Cryst. Solids 121 (1990) 307-403; Matsoukas, T., and Gulari, E., Colloid J. Interface Sci. 132 (1989) 13-21; Badley, R.D., et al., Langmuir 6 (1990) 792-801).

Für die Dotierung von Silikatpartikeln aus dem Sol-Gel-Verfahren mit Farbstoffen sind im Stand der Technik unterschiedliche Möglichkeiten beschrieben.

Van Blaaderen, et al., Langmuir 8 (1992) 2921-2931, sowie Quellet, et al., Colloid J. Interf. Sci. 159 (1993) 150-7 stellten Stöber-Partikel her, die mit Fluoresceinisothiocyanat oder Rhodaminisothiocyanat (Verhaegh, and Van Blaaderen, A., Langmuir 10 (1994) 1427-1438) gefärbt wurden. Die Farbstoffe wurden zuvor mit 3-Aminopropyltriethoxysilan (AMEO) umgesetzt. Der Farbstoff wurde hier kovalent oberflächlich aufgebracht oder kovalent und schichtförmig in die Partikel eingebaut. Die so erzielte inhomogene Einfärbung spielte in diesen Untersuchungen eine untergeordnete Rolle und das Verfahren führte in der Regel zu relativ großen Partikeln im Größenbereich von etwa 500 nm Durchmesser. Die erhaltenen Partikel wurden als Modellsysteme für die Grundlagenforschung verwendet. Aufgrund der hohen Partikelgröße sind die solchermaßen hergestellten Silikatpartikel für diagnostische Anwendungen weniger geeignet.

Shibata, S., et al., J. Sol-Gel Sci. and Techn. 10 (1997) 263-268 dotierten Stöber-Partikel physikalisch mit diversen hydrophilen Farbstoffen wie Rhodamin 6G, wasserlöslichen Porphyrinen, Nil Blau, etc.. Von Schwert, R., Dissertation; Würzburg 2000 wurde gefunden, dass sich nur kationische nicht aber anionische oder hydrophobe Farbstoffe physikalisch (nicht-kovalent) im Stöber-Prozess einbauen lassen.

Von Matijevic, et al., Dyes and Pigments 17 (1991) 323-340 wurden auf der Oberfläche mit 3-Aminopropyl-triethoxysilanen modifizierte Stöber-Partikel vorgestellt, welche über die Aminogruppe mit Farbstoffen in einem aufwendigen Verfahren verbunden wurden. Stöber-Partikel wurden auch auf verschiedene andere Arten an der Oberfläche modifiziert. Hierzu gehören Reaktionen mit 3-Methacryloxypropyltrimethoxysilan (MEMO), Octadecyltrimethoxysilan (ODS) und 3-Aminopropyltriethoxysilan (AMEO) (Giesche, H., and Matijevic, E., Dyes and Pigments 17 (1991) 323-340; Van Blaaderen, A., and Vrij, A., Colloid J. Interface Sci., 156 (1993) 1-18; Badley, R.D., et al., Langmuir 6 (1990) 792-801; Philipse, A.P., and Vrij, A., Colloid J. Interface Sci. 12 (1989) 121-136; Van Helden, A.K., and Vrij, A., Colloid J. Interface Sci. 81 (1981) 354-368).

Homogen gefärbte Silikatpartikel können durch kovalenten Farbstoffeinbau im Sol-Gel-Verfahren hergestellt werden (EP 1 036 763). Um in diesem Verfahren eingesetzt werden zu können, müssen die Farbstoffe jedoch erst silanisiert werden. Nur so ist ein kovalenter Einbau möglich.

EP0658525 A offenbart die Verwendung von polyhalogenierten Metallalkylalkoxy-Verbindungen zum Erzeugen von wasserabweisenden Schichten. Die Oberfläche eines Substrates wird durch Hydrolyse einer polyfluorierten Metallalkylalkoxy-Verbindung mit einer homogenen wasserabweisenden Schicht versehen.

DE10163646 A offenbart ein Verfahren zur Beschichtung von Substraten, in dem das Substrat in Gegenwart einer polyhalogenierten Metallalkylalkoxy-Verbindung durch Hydrolyse einer Metalloxidvorstufe beschichtet wird. Der Einbau eines nicht-halogenierten Zielmoleküls ist möglich.

US2003/0032681 A offenbart ein Verfahren zur Erzeugung von hydrophoben Aerogelen, indem eine Vorstufe des Metalloxids und eine polyhalogenierte Metallalkyloxy-Verbindung eingesetzt wird.

Viele wichtige Zielmoleküle, für den Einbau in Nano-Partikel, insbesondere viele Farbstoffe tragen Halogengruppen als Substituenten. Diese Farbstoffe sind nicht nur hydrophob sondern auch oleophob.

Fluorhaltige Beschichtungen auf $SiO_2$-Basis sind bekannt (Lotus-Effekt, Easy to clean Oberflächen, Brechzahlanpassung - Kron J., et al., 2. Wörlitzer Workshop: Funktionelle Schichten - Adhäsive und antiadhäsive Oberflächen (Fördergemeinschaft "Dünne Schichten" e.V.), Tagungsband 2000. Aufgrund des schnellen Vergelens bei der Partikelherstellung mit Fluoralkyltrialkoxysilanen sind jedoch noch keine fluorhaltigen Silikatpartikel synthetisiert worden. Diese wären jedoch wünschenswert damit hydrophobe und insbesondere auch oleophobe Moleküle auch in $SiO_2$-Partikel eingeschlossen werden können.

Deshalb war es Ziel der Erfindung, den Herstellungsprozess für Metalloxid-Partikel so zu modifizieren, dass hydrophobe Komplexe oder hydrophobe organische Farbstoffe, beispielsweise in $SiO_2$-Partikel eingebunden werden können.

Aufgabe war es daher, ein Verfahren zu entwickeln, welches den Einbau von hydrophoben und insbesondere oleophoben Farbstoffen in Metalloxid-Partikeln ermöglicht.

Die Aufgabe wird gelöst durch die in den unabhängigen Ansprüchen näher definierte Erfindung. Die abhängigen Ansprüche stellen bevorzugte Ausführungsformen dar.

Es wurde überaschenderweise gefunden, dass es möglich ist, Metalloxidpartikel im Sol-Gel-Verfahren in Anwesenheit von Fluororganylalkoxysilan oder von Arylalkoxysilan herzustellen und bei diesem Herstellungsprozess hydrophobe insbesondere oleophobe Zielmoleküle nicht-kovalent in diese Nano-Partikel einzubauen.

Unter "Sol-Gel-Verfahren" wird jeder Prozess verstanden, welcher in Analogie zu den von Stöber, et all. (1968), *supra,* beschriebenen Verfahren zur Herstellung kolloider Nano-Partikel eingesetzt werden kann. Die Produkte aus diesem Verfahren werden als Stöber-Partikel oder Nano-Partikel bezeichnet.

Die Erfindung betrifft die nicht-kovalente Einlagerung "halogen-haltiger Zielmoleküle" in Metalloxid-Partikel. Die Zielmoleküle im Sinne dieser Erfindung bestehen zu 5 - 65 Gewichtsprozent (= Gew.-%) aus Halogen und haben vorzugsweise ein Molekulargewicht zischen 250 und 5000 Dalton. Zielmoleküle sind insbesondere halogen-haltige Farbstoffe und halogen-haltige Insektizide.

Das halogen-haltige Zielmolekül ist nicht silanisiert. Die Einlagerung in die Stöber-Partikel erfolgt somit nicht kovalent.

Das erfindungsgemäße Verfahren ist insbesondere dadurch gekennzeichnet, dass es erstmals gelungen ist, Stöber-Partikel in Anwesenheit einer "polyhalogenierten Metallalkylalkoxy-Verbindung" herzustellen. Das Verfahren kann in An- oder Abwesenheit eines Zielmoleküls durchgeführt werden. Eine polyhalogenierte Metallalkylalkoxy-Verbindung enthält einen linearen oder verzweigten Alkylrest mit 2 bis 20 Kohlenstoffatomen, welcher mindestens zwei Halogengruppen trägt. Bevorzugterweise enthält der polyhalogenierte Alkylrest weniger als 30 Halogengruppen. Besonders bevorzugte polyhalogenierte Metallalkylalkoxy-Verbindungen enthalten Alkylreste mit 3 bis 20 Kohlenstoffatomen und 2 bis 15 Halogengruppen. Besonders bevorzugt sind Metallalkylalkoxy-Verbindungen auf Basis von Silicium, Titan oder Zirkonium, insbesondere die Alkylalkoxysilane.

Als "Metalloxid-Vorstufen" werden in der Regel Metallalkoxide oder Metallhalogenide eingesetzt. Bevorzugte Metallalkoxide sind die Silicium-Metalloxide, insbesondere Tetraethoxysilan (TEOS) und Tetramethoxysilan (TMES).

Beim ursprünglichen Stöber-Prozess mit $SiO_2$ als Metalloxid werden die $SiO_2$-Partikel durch Hydrolyse und Kondensation eines Siliciumalkoxides, meistens Tetraethoxysilan (TEOS), hergestellt. Die Reaktion findet in einem Gemisch aus Wasser, Ammoniak und einem niederen Alkohol, oft Ethanol, statt. Die Hauptreaktionen bei der Bildung

der $SiO_2$-Partikel lassen sich wie folgt beschreiben:

1) Hydrolyse

$$\equiv Si{-}OR + H_2O \rightarrow \equiv Si{-}OH + ROH$$

2) Kondensation I

$$\equiv Si{-}OR + \equiv Si{-}OH \rightarrow \equiv Si{-}O{-}Si\equiv + ROH$$

3) Kondensation II

$$\equiv Si{-}OH + \equiv Si{-}OH \rightarrow \equiv Si{-}O{-}Si\equiv + H_2O$$

4) Gesamtreaktion

$$Si(OR)_4 + 2H_2O \rightarrow SiO_2 + 4\,ROH$$

Bei der Synthese werden Alkohol, Wasser und Ammoniak vorgelegt und anschließend mit TEOS versetzt. Je nach Synthesebedingungen tritt nach wenigen Sekunden bis Minuten eine Opaleszenz der Lösung ein. Diese Induktionsperiode nimmt mit abnehmender Partikelgröße und Temperatur zu. Die erhaltenen Partikel haben in ihrer Größe eine Standardabweichung von 2-8%. Der Alkohol dient während der Reaktion als Cosolvens für das wasserunlösliche TEOS. Durch den Ammoniak werden sowohl die Hydrolyse- als auch die Kondensationsreaktion katalysiert. Die Base deprotoniert die oberflächlichen Silanolgruppen der ausgebildeten Partikel. Die so erzeugten negativen Ladungen stabilisieren das kolloidale System infolge der elektrostatischen Abstoßung. So bleiben die Suspensionen über mehrere Monate bis Jahre hinweg stabil. Gleichzeitig ermöglichen die vorhandenen Silanolgruppen eine Funktionalisierung der Partikeloberfläche (In der Literatur sind hierzu bereits diverse Beispiele aufgeführt (z.B. AMEO, ETEO, MEMO, MPTMO, GLYMO, GF20). Durch geeignete Oberflächenmodifizierung kann die Dispergierbarkeit in verschiedenen Lösungsmitteln variiert werden.

Die Partikelgröße lässt sich durch die Ammoniak- und Wasserkonzentration, die Reaktionstemperatur und das eingesetzte Lösungsmittel steuern. Folgende Tendenzen sind zu erkennen:

1) Sowohl die Erhöhung der Ammoniak- als auch die der Wasserkonzentration beschleunigt die Reaktion und lässt die Partikelgröße steigen.

2) Mit steigender Kettenlänge des Alkohols und dessen Verzweigungsgrades nimmt die Partikelgröße zu und die Monodispersität ab.

3) Die Partikelgröße nimmt zu, je länger die Alkoxidreste des Silanes sind. Die Ionenstärke der Reaktionslösung (Salzeffekt) vermag ebenfalls die Partikelgröße infolge der Komprimierung der elektrostatischen Doppelschicht zu beeinflussen.

4) Übersteigt die TEOS-Konzentration 0,2 mol/l, werden die Partikel polydisperser und die Sphärizität der Partikel verschlechtert sich.

Die aus dem ursprünglichen Stöber-Prozess vorstehend diskutierten Einflüsse auf die Partikelbildung gelten analog auch für ein erfindungsgemäßes Verfahren in welchem zusätzlich eine polyhalogenierte Metallalkylalkoxy-Verbindung eingesetzt wird, um z.B. ein halogen-haltiges Zielmolekül in die gemäß diesem Verfahren erhältlichen Stöber-Partikel einzulagern.

Das erfindungsgemäße Verfahren kann beispielsweise ausgeführt werden, indem unter dem Fachmann bekannten geeigneten Reaktionsbedingungen die Komponenten Metalloxid-Vorstufe, halogenhaltiger Farbstoff und polyhalogenierte Metallalkylalkoxy-Verbindung zeitgleich zur Reaktion gebracht werden.

Vorzugsweise werden das halogen-haltige Zielmolekül und die polyhalgenierte Metallalkylalkoxy-Verbindung vorab in einen geeigneten Lösungsmittel gelöst, gemischt und gemeinsam zugegeben.

Besonders bevorzug ist ein Sol-Gel-Verfahren zur Herstellung eines mindestens ein halogen-haltiges Zielmolekül enthaltenden Metalloxid-Partikels enthaltend die Stufen, a) Herstellung einer Mischung enthaltend das Zielmolekül und eine polyhalogenierte Metallalkylalkoxy-Verbindung, b) Start des Sol-Gel-Prozesses mit der Metalloxid-Vorstufe, c) Zugabe der Lösung aus a), d) optional weitere Zugabe der Metalloxid-Vorstufe und e) Beendigung des Sol-Gel-Prozesses.

Die Mengenverhältnisse der Metalloxid-Vorstufe, wie sie in den obigen Teilschritten b) und d) zum Einsatz kommen, können breit variieren. Bevorzugterweise werden in Schritt b) zwischen 90 bis 10% der insgesamt im Verfahren eingesetzten Menge an Metalloxid-Vorstufe eingesetzt und in Schritt d) entsprechend die restlichen 10 bis 90%. Besonders bevorzugt liegen die eingesetzten Teilmengen in b) bei 75 bis 25% und in d) bei 25 bis 75%.

Auch die Zeitdauer für den Start des Sol-Gel-Prozesses in Schritt b) ist variabel. Sie liegt bevorzugterweise unter 1h, weiter bevorzugt zwischen 1 und 20 min besonders bevorzugt zwischen 2 und 10 min.

Als besonders geeignet hat es sich erwiesen, die Mol-Verhältnisse von Metalloxid-Vorstufe und polyhalogenierter Metallalkylalkoxy-Verbindung aufeinander abzustimmen. Bevorzugterweise werden 0,04 bis 0,4 Mol-% an polyhalogenierter Metallalkylalkoxy-Verbindung, besonders bevorzugt 0,1 bis 0,3 Mol-% bezogen auf die Metalloxid-Vorstufe eingesetzt.

Die halogen-haltigen Zielmoleküle enthalten bevorzugterweise zwischen 10 und 65, besonders bevorzugt zwischen 15 und 50 Gew.-% an Halogen, wobei das Molekulargewicht vorzugsweise zwischen 250 und 5000 Dalton, weiter bevorzugt zwischen 300 und 4000 Dalton und besonders bevorzugt zwischen 400 und 3000 Dalton liegt.

Bevorzugte Halogene in den halogen-haltigen Zielmolekülen sind Fluor und Chlor.

Die Menge an eingesetztem Zielmolekül kann je nach Bedarf variieren. Es können natürlich auch Partikel hergestellt werden, welche kein oder nur minimale Mengen an Zielmolekül enthalten. Bevorzugterweise werden bezogen auf die Metalloxid-Vorstufe zwischen 0,1 und 10 Gew.-% an Zielmolekül eingesetzt, besonders bevorzugt, zwischen 0,2 und 5 Gew.-%.

Als Metalloxide oder als Komponenten von Mischoxiden kommen insbesondere die Oxide der Elemente aus den Gruppen III, IV und IVb des Perioden-Systems in Betracht. Bevorzugterweise wird die Metalloxid-Vorstufe so gewählt, dass die Stöber-Partikel neben den Einschlüssen des Zielmoleküls und dem kovalent eingebauten polyhalogenierten Metallalkyl im Wesentlichen aus $B_2O_3$, $Al_2O_3$, $SiO_2$, $SnO_2$, $ZrO_2$ oder $TiO_2$ besteht.

Natürlich können auch Partikel auf Mischoxidbasis in analoger Weise im erfindungsgemäßen Sol-Gel-Verfahren hergestellt werden.

Besonders bevorzugt werden Metalloxid-Vorstufen auf Bor-, Silicium- oder Zirkonium-Basis eingesetzt, wobei Silicium-Vorstufen ganz besonders bevorzugt sind.

Gegenstand der vorliegenden Erfindung sind auch die mit einem erfindungsgemäßen Verfahren erhältlichen Partikel als solche.

Insbesondere sind dies Partikel, welche erhalten wurden durch Hydrolyse und Kondensation von Sol-Gel-Vorstufen von Elementen der Gruppen III, IV, IVb, vorzugsweise Si (Ti, Zr, Al) in Kombination mit hydrophoben Sol-Gel-Vorstufen, wie beispielsweise perfluorierte Alkyltrialkoxysilane (z.B. 3,3,3-Trifluoropropyltrimethoxysilan) oder Bis(trialkoxysilylalkyl)benzole (z.B. Bis(trimethoxysilylethyl)benzol). Bevorzugterweise enthalten diese Partikel die oben geschilderten Zielmoleküle.

Durch die hydrophobe (fluorierte) Umgebung, wie sie in den erfindungsgemäß hergestellten Metalloxid-Partikeln vorliegt, zeigen beispielsweise Fluorophore nicht die sonst üblichen negativen Einwirkungen von Wasser, d.h., es tritt kein Quenching, welches auf Wasser zurückzuführen ist, auf.

Durch die erfindungsgemäße Modifizierung des Partikelinnern ist es möglich, neben Lanthanoid-Komplexen sowohl andere hydrophobe (z.B. LC Red 640) als auch oleophobe Moleküle/Komplexe in die ursprünglich hochpolare oxidische Matrix einzubringen. Die Partikeloberfläche kann nach Bedarf beispielswesie mit Carboxyl-, Amino-, Mercapto-, Epoxy-, und Aldehydgruppen funktionalisiert werden. Dies kann u.a. durch Silanisierung erfolgen. Die Partikelgröße kann mit enger Größenverteilung vom Nano- Mikrometerbereich eingestellt werden.

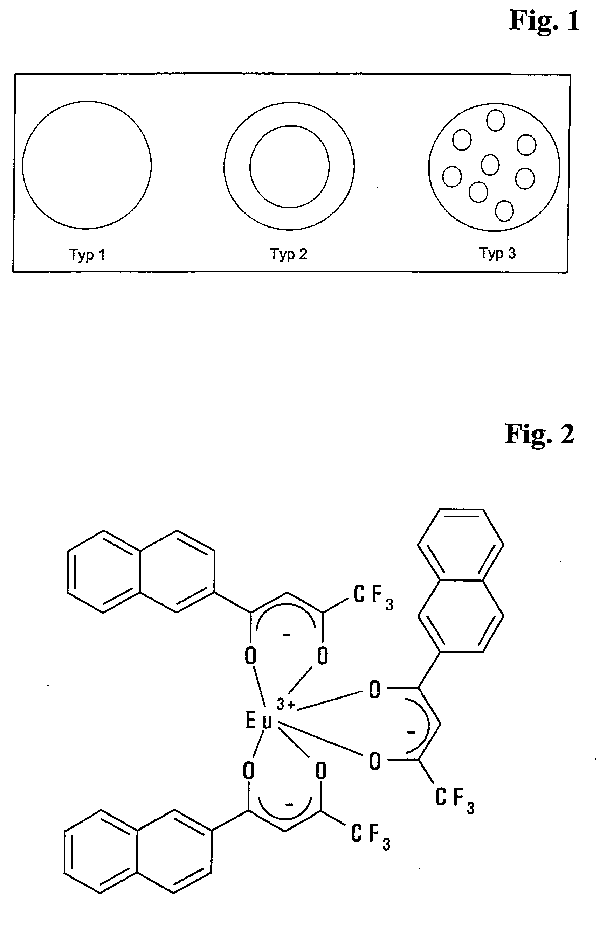

Der Partikel-Typ (vergl. Fig. 1) ist nicht entscheidend. Bevorzugterweise bestehen die Partikel aus einem anorganisch-oxidischen Kern. Dieser Kern kann homogen (Typ 1) oder heterogen (Kern-Schale-Typ (2) oder Rosinenkuchen-Modell (3)) aufgebaut sein.

Die erfindungsgemäßen, mit einem halogen-haltigen Zielmolekül beladenen Stöber-Partikel, lassen sich in unterschiedlichen Gebieten der Technik sehr vorteilhaft einsetzen. Sie eignen sich insbesondere als Markierungen für Biomoleküle und daraus resultierend für den Einsatz der markierten Biomoleküle in immunologischen und anderen Nachweisverfahren, als Toner in der Druckindustrie, als Sonnenschutzmittel und als Insektizide. Auch die Einarbeitung in eine beliebige Polymermatrix ist möglich (z.B. Ormocer®). Die Verwendungen als Markierung für Biomoleküle oder als Insektizid sind besonders bevorzugt.

Die erfindungsgemäßen Metalloxid-Partikel können nachträglich modifiziert werden. So können die Partikel beispielsweise mit einer oder mehreren weiteren, bevorzugt farblosen Schichten ummantelt werden, um den Partikel chemisch zu schützen. Zweck dieser Ummantelung ist es, eine möglichst gleichmäßige Metalloxidoberfläche, z.B. eine silikatartige Oberfläche zu erhalten, aus der keine Farbstoffinolekküle mehr herausragen. Somit werden weitere Kopplungen mit funktionellen Gruppen und Biomolekülen erleichtert und die Gefahr der Nebenreaktionen mit Farbstoffinolekülen an der Oberfläche wird minimiert. Bevorzugt wird eine weitere ungefärbte Silikatschicht um den homogen gefärbten Silikatpartikel mit einer Dicke von 1 bis 30 nm, bevorzugt 2 bis 20 nm aufgebracht.

Die erfindungsgemäßen Metalloxid-Partikel können entweder direkt oder an der Oberfläche der zusätzlichen Ummantelungsschicht mit funktionellen Gruppen versehen werden, um weitere Moleküle, erfindungsgemäß bevorzugt Biomoleküle, an die Partikel zu koppeln.

Die funktionellen Gruppen können wiederum über Spacer- oder Linkermoleküle auf den Partikeln aufgebracht sein. Wichtig ist, dass die einzuführende funktionelle Gruppe im Netzwerk des Metalloxid-Partikels verankert ist, um eine stabile Verbindung zu gewährleisten.

Bevorzugte Modifikationsgruppen sind funktionelle Gruppen wie beispielsweise Carboxylgruppen, Aminogruppen, Epoxygruppen, Hydroxylgruppen oder Thiolgruppen. Dem Fachmann ist die Einführung solcher Gruppen geläufig. Sie braucht daher hier nicht gesondert erläutert zu werden.

Bevorzugt ist die Einführung von Carboxylgruppen, die beispielsweise durch Umsetzung des gefärbten Metalloxid-Partikels mit einem Disäureanhydrid, das die besagte Silanolgruppe zur Verankerung im Partikel enthält, erfolgt. Zur Aktivierung der funktionellen Gruppen können diese vor Reaktion mit den zu koppelnden Biomolekülen beispielsweise mit N-Hydroxysuccinimid in Aktivester überführt werden. All diese Schritte sind dem Fachmann geläufig.

Die erfindungsgemäßen Konjugate bestehen aus mit einem halogen-haltigen Farbstoff beladenen Metalloxid-Partikeln und Biomolekülen. Die Kopplung der Biomoleküle erfolgt bevorzugt über die funktionellen Gruppen, die an der Oberfläche eingeführt wurden. Im allgemeinen erfolgt die Anknüpfung der Biomoleküle an die Oberfläche des Partikels über freie Amino- oder Carboxylgruppen oder Thiolgruppen, so dass die kovalente Verknüpfung bevorzugt über Amid- oder Thioetherbindungen erfolgt.

Unter Biomolekülen im Sinne der vorliegenden Erfindung werden alle Moleküle verstanden, die für eine Bestimmung eines Analyten in einer Probe, insbesondere für eine immunologische Bestimmung eines Analyten verwendet werden können. Unter den Begriff Biomoleküle fallen beispielsweise Proteine, Glykoproteine, Peptide, Nukleinsäuren, peptidische Nukleinsäuren, Saccharide, Hormone, Haptene, Vitamine, natürlich vorkommende oder künstlich hergestellte Bindepartner und Antigene. Bevorzugt werden als Biomoleküle im erfindungsgemäßen Konjugat Antikörper und deren Fragmente eingesetzt. Unter Antikörpern werden sowohl monoklonale als auch polyklonale und chimäre Antikörper und jeweils deren Fragmente wie beispielsweise Fab, Fc, Fab', F(ab')$_2$, Fv, scFv verstanden. Auch die Kopplung mit den Biomolekülen Streptavidin oder Avidin oder Biotin gehört zu einer der bevorzugten Ausführungsformen der Erfindung.

Ein weiterer Gegenstand der Erfindung sind Konjugate aus den erfindungsgemäßen Metalloxid-Partikeln und Biomolekülen. Diese erfindungsgemäßen Konjungate werden vorzugsweise in ein Verfahren zum Nachweis eines Analyten in einer Probe durch Zusammenbringen der Probe mit einem oder mehreren analytspezifischen Bindepartnern eingesetzt.

Das Verfahren zum Nachweis eines Analyten wird bevorzugt als Immunoassay durchgeführt. Das heißt, dass mindestens einer der analytspezifischen Bindepartner ein immunologischer Bindepartner ist. In diesem Verfahren wird die Probe, in der der Analyt vermutlich enthalten ist, mit einem immunologisch spezifischen Bindepartner inkubiert. Dieser immunologisch spezifische Bindepartner ist im Falle eines Antigen-Nachweises wie beispielsweise bei Tumormarkern wie PSA ein Antikörper oder ein Fragment davon, das spezifisch an den Analyten, das heißt das Tumorantigen PSA bindet. Bei Verfahren zum Nachweis von Antikörpern gegen ein bestimmtes Antigen (z.B. Anti-HCV-Antikörper) kann beispielsweise als immunologisch spezifischer Bindepartner das entsprechende Antigen eingesetzt werden. Der Nachweis der erfolgten spezifischen Bindung erfolgt über das erfindungsgemäße Konjugat, dessen eingebauter Farbstoff als Markierung dient. Die auf den Metalloxid-Partikeln immobilisierten Biomoleküle fungieren als spezifische Bindepartner für den Analyten oder als spezifische Bindepartner für eine Substanz, die ihrerseits spezifisch an den Analyten gebunden ist.

Beispielsweise kann in einem diagnostischen Testverfahren als Biomolekül Streptavidin oder Avidin mit dem Metalloxid-Partikel konjugiert sein. Die Bindung des Konjugats erfolgt dann an die Biotingruppe eines Moleküls (beispielsweise ein Peptidantigen oder eine Nukleinsäuresequenz), das selbst biotinyliert ist.

Die Durchführung von Immunoassays sowie von Nukleinsäuretests ist dem Fachmann geläufig.

Bevorzugterweise werden die erfindungsgemäßen Konjugate in einen Test auf Basis eines Teststreifen eingesetzt. Im folgenden ist beispielhaft beschrieben, wie ein Streifentest aufgebaut sein kann und wie ein solches Testverfahren abläuft.

Teststreifen bestehen üblicherweise aus einem Trägermaterial, auf das ein Auftragvlies, eine Membran und ein Saugvlies aufgebracht sind. In Chromatographierichtung aufwärts, also über dem Startpunkt der Probenflüssigkeit, ist das erfindungsgemäße Konjugat, dessen Biomoleküle spezifisch für den Analyten sind, und gegebenenfalls weitere spezifische Bindepartner für den Analyten aufgebracht und getrocknet. Erst durch Kontakt mit einer Flüssigkeit, d.h. mit der Probe, beginnen die spezifischen Bindepartner und das erfindungsgemäße Konjugat chromatographisch zu wandern. In Chromatographierichtung sind auf der Membran außerdem in Form von zwei nacheinander folgenden Streifen oder Strichen verschiedene Proteine aufgebracht.

Auf dem ersten Strich (Resultatlinie) befindet sich ein immobilisierter Bindepartner, der für den Analyten spezifisch ist. Auf dem ersten Strich kann auch ein Molekül wie Streptavidin gebunden sein, an das dann biotinylierte, analytspezifische Bindepartner binden können. In diesem Fall müssen dann die biotinylierten, analytspezifischen Bindepartner ebenso wie das Konjugat über dem Startpunkt des Teststreifens aufgebracht sein und mit der Probe mit chromatographiert werden. Auf dem zweiten Strich in Chromatographierichtung (Kontroll-Linie) ist ein Bindepartner aufgebracht, der die Biomoleküle des erfindungsgemäßen Konjugats spezifisch bindet.

Während die Probenflüssigkeit vom Startpunkt des Teststreifens durch den Streifen wandert, beginnen das erfindungsgemäße Konjugat und gegebenenfalls die analytspezifischen Bindepartner ebenfalls in Richtung Flüssigkeitsfront zu wandern. Dabei findet die spezifische Bindung von Analyt aus der Probe an den auf dem ersten Strich immobilisierten Bindepartner statt. Das erfindungsgemäße Konjugat bindet ebenfalls an den Analyten, so dass ein Sandwich entsteht, der über die Färbung der Metalloxid-Partikel detektiert werden kann. Die Flüssigkeit im Teststreifen läuft bis zum Ende des Teststreifens weiter. Dabei wird auf dem zweiten Strich das nicht durch Analytbindung verbrauchte erfindungsgemäße Konjugat über den Bindepartner, der spezifisch die Biomoleküle des Konjugats bindet, abgefangen. Anhand der am Kontroll-Strich auftretenden Färbung kann gesehen werden, dass die Chromatographie. im Teststreifens prinzipiell funktioniert hat und/oder abgeschlossen ist.

Ein weiterer Gegenstand der Erfindung ist ein diagnostischer Teststreifen, der neben dem erfindungsgemäßen Konjugat alle weiteren für den Ablauf des chromatographischen Tests erforderlichen Bestandteile enthält.

Erfindungsgemäß können die Konjugate auch in Nukleinsäure-Hybridisierungsassays eingesetzt werden. Hier wird als Biomolekül eine Nukleinsäuresonde, die spezifisch mit einer nachzuweisenden Nukleinsäuresequenz hybridisiert, mit den erfindungsgemäß gefärbten Metalloxid-Partikeln gekoppelt. Über den im Metalloxid-Partikel enthaltenen Farbstoff kann die Nukleinsäuresequenz aus der Probe oder aus dem beispielsweise mittels PCR-Amplifizierung erhaltenen Ansatz spezifisch detektiert werden.

Erfindungsgemäß können die Konjugate aus den erfindungsgemäßen Metalloxid-Partikeln und einem Biomolekül auch in Array- oder Chip-Systemen eingesetzt werden. Bei solchen Systemen handelt es sich um miniaturisierte Testkonzepte. Auf die Oberfläche geeigneter Festphasen, wie beispielsweise Kunststoffe, Glas, Metalle oder Metalloxide, werden in kleinsten Abständen, die im Mikrometer-Bereich liegen, räumlich voneinander getrennte Reagenzienspots aufgebracht. Diese Reagenzienspots enthalten die für die Durchführung des jeweiligen Nachweisverfahrens benötigten spezifischen Bindepartner. Mit Hilfe solcher Nachweisverfahren ist es möglich, mit wenig Material und wenig Probe auf kleinstem Raum eine Vielzahl verschiedener analytischer Parameter gleichzeitig auf schnelle Art nachzuweisen. Die erfindungsgemäßen Konjugate aus mit halogen-haltigen Farbstoffen gefärbten Metalloxid-Partikeln und Biomolekülen können auch in diesen Array- oder Chipsystemen als Nachweisreagenzien eingesetzt werden. Als Farbstoffe, mit denen die Metalloxid-Partikel gefärbt sind, kommen bevorzugt Fluoreszenzfarbstoffe, insbesondere solche, welche eine zeitaufgelöste Messung der Fluoreszenz ermöglichen, in Betracht. Insbesondere ist es möglich, mittels der erfindungsgemäßen Konjugate unterschiedlich gefärbte und/oder unterschiedliche, mit verschiedenen Biomolekülen beladene Konjugate einzusetzen, um gleichzeitig verschiedene Analyten über die verschiedenen (Fluoreszenz-) Farbstoffe nachzuweisen. Insbesondere für Nukleinsäure-Hybridisierungsassays haben sich solche Array-Systeme als vorteilhaft erwiesen.

Der gleichzeitige Nachweis mehrerer verschiedener Analyten (beispielsweise HIV- und HCV-spezifische Nukleinsäuren in einer Probe oder HIV- und HCV-spezifische Antikörper in einer Probe) mittels der erfindungsgemäßen Konjugate, die jeweils unterschiedlich gefärbt und/oder mit verschiedenen Biomolekülen beladen sind, ist nicht auf die Anwendung in Array-Systemen beschränkt, ist jedoch dort besonders sinnvoll durchzuführen.

Als Probenmaterial für alle diagnostischen Testverfahren können alle Körperflüssigkeiten eingesetzt werden. Bevorzugt werden Vollblut, Serum, Plasma, Urin, Schweiß oder Speichel eingesetzt.

Ein weiterer Gegenstand der Erfindung ist die Verwendung der Konjugate aus den erfindungsgemäßen Metalloxid-Partikeln und Biomolekülen in einem diagnostischen, bevorzugt immunologischen Verfahren zum Nachweis eines Analyten in einer Probe.

Ebenfalls ein Gegenstand der Erfindung ist ein diagnostisches Reagenz, das die erfindungsgemäßen Konjugate enthält. Das Reagenz kann außerdem die dem Fachmann geläufigen Pufferzusätze, Salze oder Detergenzien enthalten.

Ein Testkit, in dem die erfindungsgemäßen Konjugate und weitere für die Durch-führung eines Tests üblichen, dem Fachmann bekannten Reagenzien, enthalten sind, gehört ebenfalls zu den bevorzugten Ausgestaltungen der vorliegenden Erfindung.

Viele wichtige Insektizide sind stark halogen-haltig. Diese Insektizide stellen bevorzugte Zielmoleküle für das erfindungsgemäße Verfahren zur nicht-kovalenten Einlagerung in Metalloxid-Partikel insbesondere Silikatpartikel dar.

Der Verdauungstrakt von Insekten, insbesondere von Insektenlarven unterscheidet sich fundamental von dem der Säugetiere. Während im Magen der Säugetiere ein stark saurer pH-Wert herrscht, erfolgt der Nahrungsaufschluss im Verdauungstrakt der Insektenlarven in stark alkalischen pH-Bereich.

Metalloxid-Partikel, insbesondere auf Silikatbasis oder Mischoxid-Partikel mit mehr als 20% Silikatanteil haben die spezielle Eigenschaft, dass sie unter den alkalischen pH-Bedingungen, wie sie z.B. im Verdauungstrakt der Insekten vorliegen, aufquellen und nicht kovalent eingelagerte Inhaltsstoffe, insbesondere polyhalogenierte Insektizide, abgeben. Da in den erfindungsgemäßen Partikeln die insektiziden Zielmoleküle nicht kovalent gebunden sind, werden sie im Insektendarm, also genau am angestrebten Wirkort freigesetzt und wirksam.

Der Einschluss der insektiziden Wirkstoffe in Metalloxid-Partikel gemäß dem Sol-Gel-Verfahren der vorliegenden Erfindung bewirkt zudem, dass die Wirkstoffe z.B. vor Wasser geschützt sind. Die insektizide Wirkung tritt erst nach der Nahrungsaufnahme durch das Insekt ein. Insektizide enthaltende erfindungsgemäße Sol-Gel-Partikel mit eingelagertem insektizidem Wirkstoff sind weniger giftig und/oder besser umweltverträglich, als die freien Wirkstoffe.

Halogen-haltige Farbstoffe, mit für die Druckindustrie wichtigen spektralen Eigenschaften, können in erfindungsgemäßen Verfahren in Sol-Gel-Partikel eingeschlossen werden. Solche Partikel finden insbesondere als Beimischung in sogenannten Tonern Verwendung.

Unter den halogen-haltigen Substanzen, welche sich erfindungsgemäß in Metalloxid-Partikel einlagern lassen sind viele Substanzen zu finden, welche schädliches UV-Licht aufnehmen und unterdrücken oder als längerwelliges weniger schädliches Licht wieder abgeben. Erfindungsgemäße Metalloxid-Partikel, welche solche Substanzen enthalten, werden bevorzugterweise in der Kosmetikindustrie, insbesondere als Sonnenschutzmittel verwendet.

Die folgenden Beispiele, Publikationen und die Abbildungen erläutern die Erfindung, deren Schutzumfang sich aus den Patentansprüchen ergibt, weiter. Die beschriebenen Verfahren sind als Beispiele zu verstehen, die auch noch nach Modifikationen den Gegenstand der Erfindung beschreiben.

### Beschreibung der Figuren

Fig. 1: Schematische Darstellung von homogenen (Typ 1) bzw. heterogenen (Kern-Schale (Typ 2), Rosinenkuchen-Modell (Typ 3) Partikel mit anorganisch-oxidischer Matrix.

Fig. 2: Strukturformel des Tris-[4,4,4-Trifluoro-1-(2-naphthyl)-1,3-butandion]-Eu(III)-Komplex (Eu(NTA)3-Komplex).

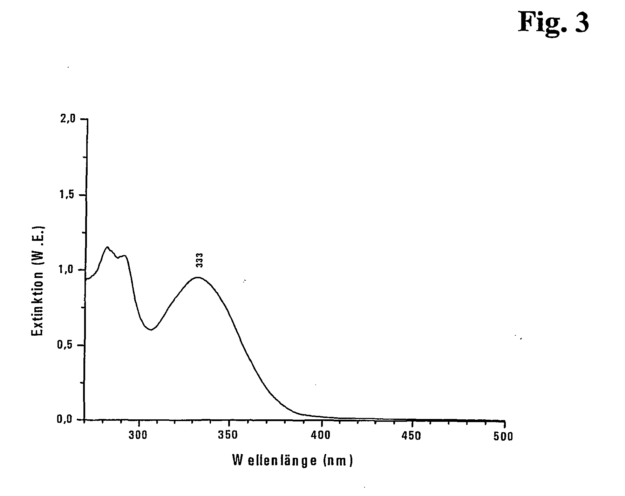

Fig. 3: UV-Vis-Spektrum des Eu(NTA)3-Komplexes in $CH_2Cl_2$ / EtOH (1:1) $\lambda$Abs.= 333 nm

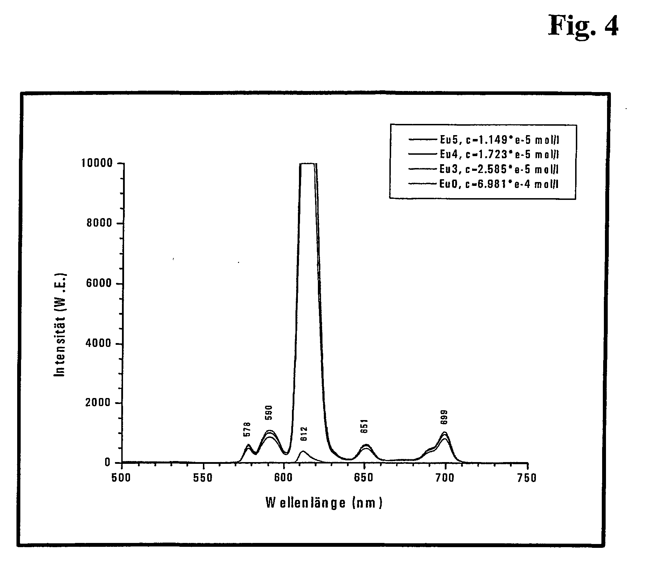

Fig. 4: Fluoreszenzspektrum des Eu(NTA)3-Komplexes in $CH_2Cl_2$/ EtOH (1:1). $\lambda$Exc.= 333 nm.
Zuordnung der Fluoreszenzbanden zu den spektralen Übergängen Emissionsbanden Zuordnung*

- $\lambda_{Em}$= 578 nm $\quad\quad$ $^5D_0 \rightarrow {}^7F_0$
- $\lambda_{Em}$= 590 nm $\quad\quad$ $^5D_0 \rightarrow {}^7F_1$
- $\lambda_{Em}$=612nm $\quad\quad$ $^5D_0 \rightarrow {}^7F_2$
- $\lambda_{Em}$= 651 nm $\quad\quad$ $^5D_0 \rightarrow {}^7F_3$
- $\lambda_{Em}$= 699 nm $\quad\quad$ $^5D_0 \rightarrow {}^7F_4$

*Lit.: R. Reisfeld et al., J. of Alloys and Compounds 300-301 (2000), 147-151.

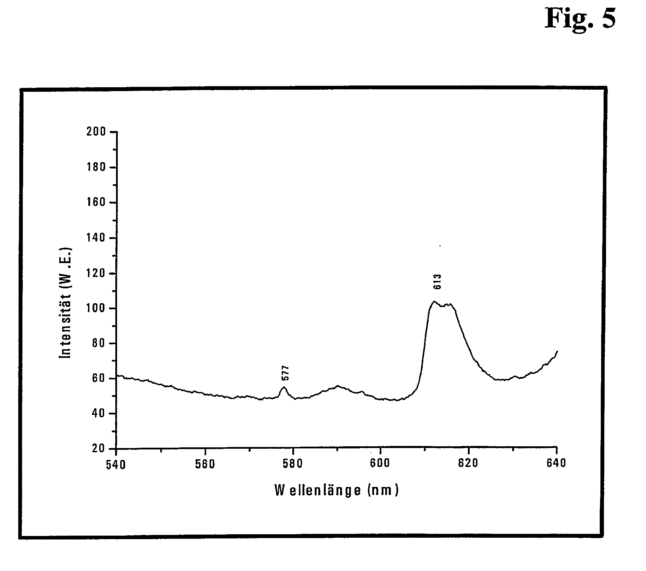

Fig. 5: Vermessung einer Feststoffprobe der Eu(NTA)3-Komplex enthaltenden Silikatpartikel, welche auf einem Objektträger fixiert wurde.
Einstellungen:

Leistung = 950 mV, Spaltweiten = EX/EM=10/1
Lichtquelle = Xenonlampe
$\lambda$Exc.= 333 nm
$\lambda$Em= 613 nm

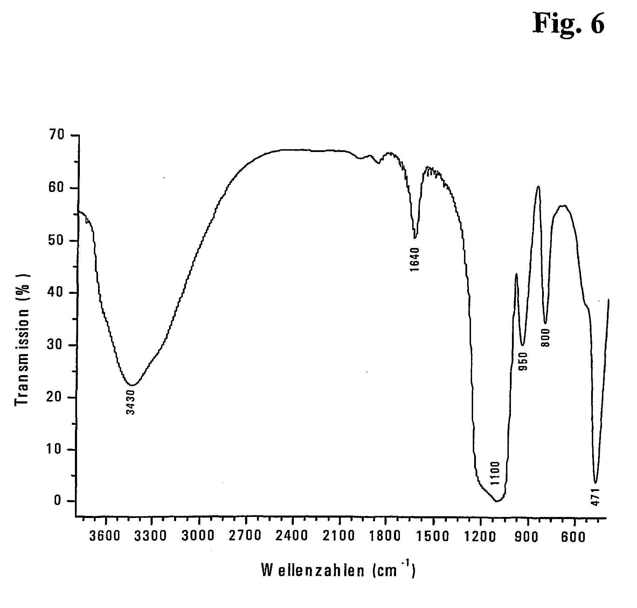

Fig. 6: IR-Spektrum der mit Eu(NTA)3-Komplex dotierten Silikatpartikel an einem KBr-Preßling
Zuordnung der Banden

$$\nu(O\text{-}H) = 3430 \text{ cm}^{-1}$$

$$\delta(H2O) = 1640 \text{ cm}^{-1}$$

$$\nu(\text{Si-O-Si}) = 1100 \text{ cm}^{-1} \text{ (as)}$$

$$\nu(\text{Si-O-Si}) = 800 \text{ cm}^{-1} \text{ (sym)}$$

$$\delta(\text{Si-O-Si}) = 471 \text{ cm}^{-1} \text{ (?)}$$

Zuordnung nach: Fendler, J.H., Nanoparticles and Nanostructured Films, Wiley-VCH 1998, 180-183.

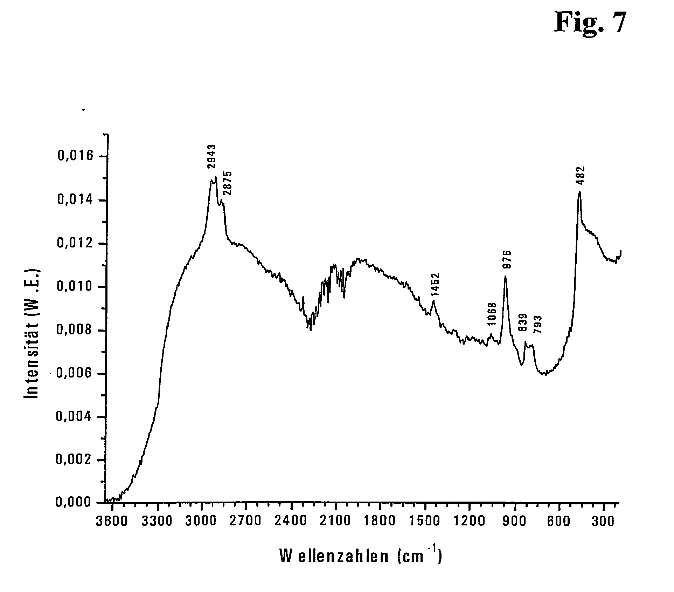

Fig. 7: Raman-Spektrum einer Feststoffprobe mit Eu(NTA)3-Komplex dotierten Silikatpartikeln
Zuordnung der Banden:

$$\nu(\text{C-H,aliph.}) = 2943, 2875 \text{ cm}^{-1} \text{ (as)}$$

$$\delta(\text{CH3,CH2}) = 1452 \text{ cm}^{-1}$$

$$\nu(\text{Si-O-Si}) = 1068 \text{ cm}^{-1} \text{ (as)}$$

$$\nu(\text{Si-O-Si}) = 839, 793 \text{ cm}^{-1} \text{ (sym)}$$

$$\delta(\text{Si-O-Si}) = 482 \text{ cm}^{-1}$$

Zuordnung nach: J. H. Fendler, supra.

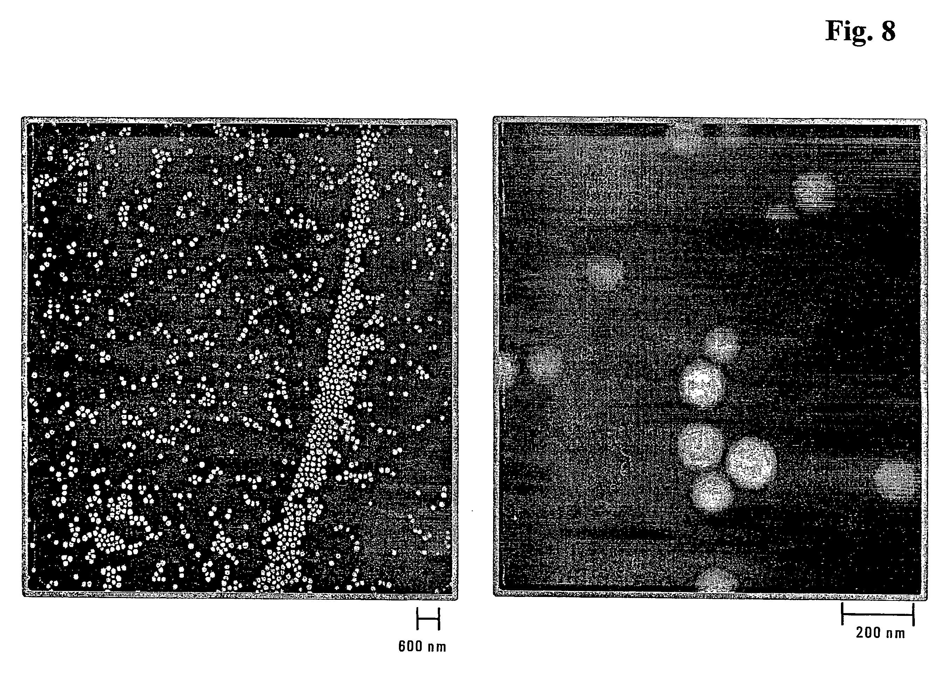

Fig. 8: TEM-Aufnahmen an 130-158nm großen mit 4.9μmol Eu(NTA)3-Komplex je g SiO2 dotierten Silikatpartikel bei 6300-facher (Fig. 8 links) bzw. 63000-facher Vergrößerung (Fig. 8 rechts)

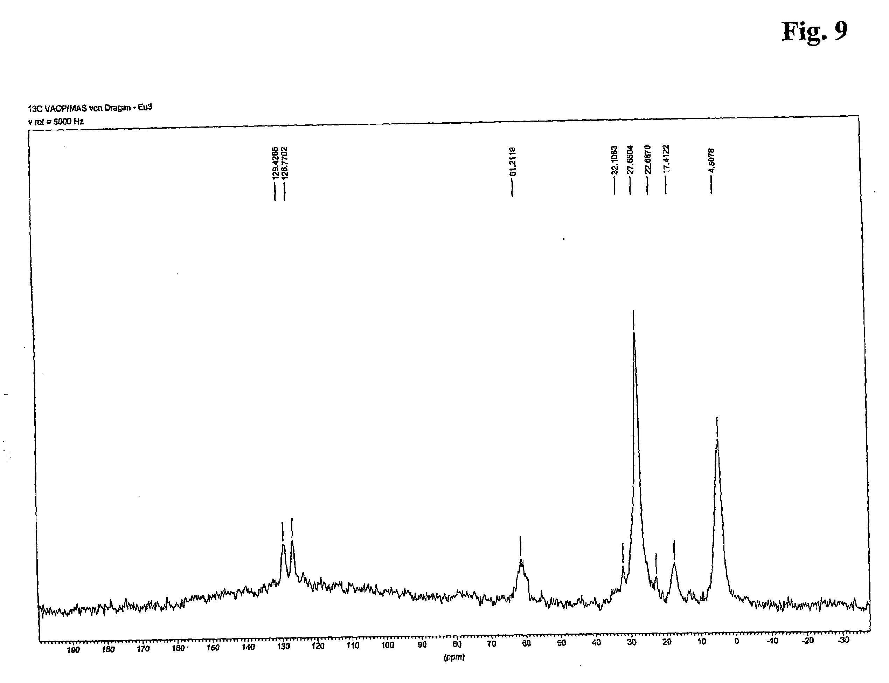

Fig. 9: VACP/MAS 13C-Festkörper-NMR-Spektrum des Eu(NTA)3-Komplexes.
Interpretation:

129.4 /126.7 ppm; arom. C-H
61.2 ppm; CH2-OH
27.6 ppm; CH2-CH2-CF3
17.4 ppm; CH3-CH2-OH
4.5 ppm; Si- CH2-CH2-CF3

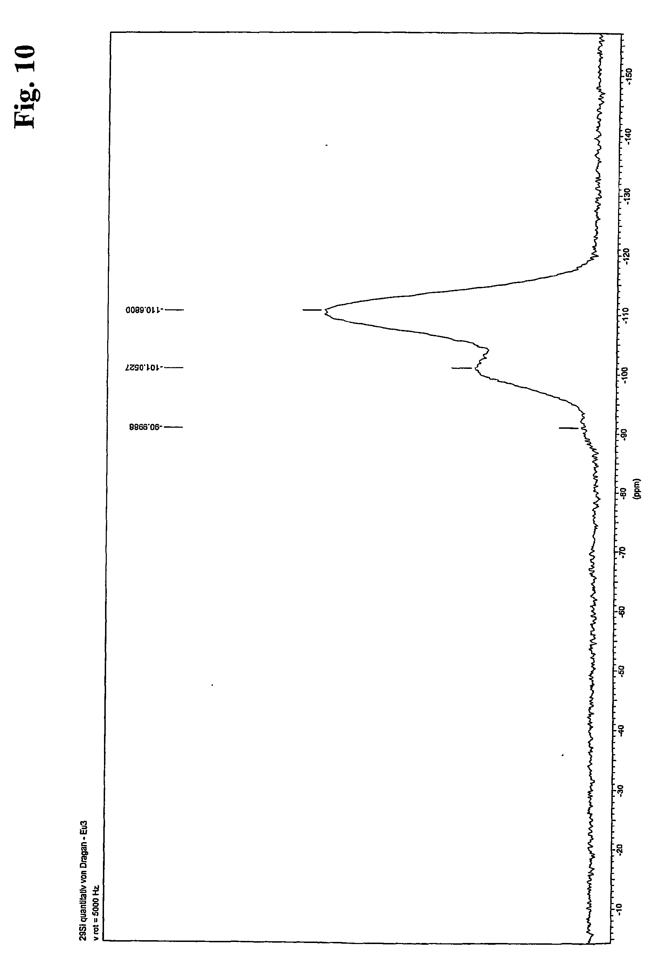

Fig. 10: MAS $^{29}$Si-Festkörper-NMR Spektrum von Silikatpartikeln, welche mit Eu(NTA)3-Komplex dotiert sind.

Die Integration der Signale ergibt untenstehende Verteilung:

110.7 ppm; Q4 -Gruppen, 70.54 %
101.1 ppm: Q3 -Gruppen, 27.24 %
91.0 ppm: Q2 -Gruppen, 2.21 %

**Verwendete Abkürzungen**

AMEO          3-Aminopropyltriethoxysilan
<Dig>          anti-Digoxigenin

ETEO        Ethyltriethoxysilan
GF20        2(3-Triethoxysilylpropyl)-Bernsteinsäureanhydrid
GLYMO       Glycidoxypropyltrimethoxysilan
Ig          Imunglobulin
LCR         LightCycler Red
MAK         Monoklonaler Antikörper
MEMO        Methacryloxypropyltrimethoxysilan
MES         2-(N-Morpholino)ethansulfonsäure
MPTMO       3-Mercaptopropyltrimethoscysilan
RPLA        Rinderplasmaalbumin
SA          Streptavidin
Si-NP       Silicat-Nanopartikel
TEOS        Tetraethoxysilan
TMES        Tetramethoxysilan

**Beispiel 1:**

**Allgemeine Vorschrift zur Darstellung von Lanthanid (III) -tris-4,4,4-triffuoro-(1-naphtoyl)-1,3-butandion-Komplexen**

800 mg (3 mmol) 4,4,4-Trifluoro-1-(2-naphtoyl)-1,3-butandion wurden in 15 ml Ethanol gelöst. Anschließend wurden zu dieser Lösung 3 ml einer 1 M NaOH-Lösung gegeben. In einem Tropftrichter wurden 1 mmol Lanthan (III)-chlorid bzw. -nitrat in 5 ml Wasser gelöst und dann langsam zur Reaktionslösung zugetropft. Danach wurden weitere 100 ml Wasser zur Reaktionsmischung gegeben und diese für eine Stunde bei 65°C gerührt. Das Produkt wurde als blassgelber Feststoff abfiltriert und drei mal mit je 5 ml Wasser und Ethanol gewaschen. Abschließend wurde es für 3 Stunden bei 120°C im Trockenschrank getrocknet.
Dieses allgemeinen Verfahren wurde zur Darstellung von Terbium (III)-, Gadolinium(III)-, Dysprosium(III)- sowie Erbium (III)-Komplexen verwendet.

**Beispiel 2:**

**Übersicht zum physikalischen Farbstoffeinbau in fluorfreie ("normale") Silicat-Nano-Partikel (Si-NP) und organofluormodifizierte ("fluorierte") Si-NP**

**2.1 Darstellung von LightCycler Red 640™ gefärbten normalen Silikatpartikeln (Referenzpartikel)**

41 mg ($4.29 \cdot 10^{-5}$ mol) LightCycler Red 640™ LCR 640 wurden in 330 ml 99 %igem Ethanol gelöst. Zu dieser Lösung wurden 168 ml demineralisiertes Wasser sowie 11 ml einer 14 molaren Ammoniumhydroxdlösung gegeben. Die Lösung wurde auf 35 °C temperiert. Nachdem sich ein thermisches Gleichgewicht eingestellt hat, wurden unter starkem Rühren 24 ml (107 mmol) Tetraethoxysilan (TEOS) zugegeben. Nach 24 h war die Reaktion vollständig abgeschlossen. Man erhält eine farbige Dispersion mit einem Feststoffgehalt von ca. 2 Gewichts-%. Die Partikel besitzen eine Größe von ca. 135 nm Durchmesser. Diese Partikel wurden durch dreimaliges Abzentrifugieren und Redispergieren in frischem Ethanol von nicht eingebautem Farbstoff gereinigt.

**2.2 Darstellung von LightCycler Red 640™ gefärbten fluorierten Silikatpartikel**

**a) Vorschrift für Partikel mit 0.3% Fluoralkylsilangehalt**

Zu einer auf 35 °C temperierten Lösung aus 165 ml EtOH, 84 ml $H_2O$ und 5.5 ml $NH_4OH$ wurden 23.8 $\mu$mol LightCycler Red 640 ™, dann 6 ml TEOS und 30 $\mu$l (155 $\mu$mol) 3,3,3-Trifluorpropyltrimethoxysilan gegeben (eingesetztes Verhältnis von LCR 640: Fluoralkylsilan = 1 : 7). Nach 5 minütigem Rühren wurden die restlichen 6 ml TEOS zur Reaktionsmischung gegeben. Die Reaktion wurde nach 8 h abgebrochen und die Partikel durch Zentrifugation abgetrennt. Die Partikel wurden in $H_2O$ redispergiert und durch mehrfaches Zentrifugieren und Redispergieren gereinigt.

b) Vorschrift für Partikel mit 0.2% Fluoralkylsilangehalt

Zu einer auf 30 °C temperierten Lösung aus 31 ml EtOH, 20 ml $H_2O$ und 7 ml $NH_4OH$ wurden 23.3 $\mu$mol LightCycler Red 640 ™, dann 5 ml TEOS und 20 $\mu$l (119 $\mu$mol) 3,3,3-Trifluorpropyltrimethoxysilan gegeben (eingesetztes Verhältnis von LCR 640: Fluoralkylsilan = 1 : 5). Nach 5 minütigem Rühren wurden die restlichen 5 ml TEOS zur Reaktionsmischung gegeben. Die Reaktion wurde nach 8 h abgebrochen und die Partikel durch Zentrifugation abgetrennt. Die Partikel wurden in $H_2O$ redispergiert und durch mehrfaches Zentrifugieren und Redispergieren gereinigt.

**2.3 Darstellung von Eu(III)-tris-4,4,4-trifluoro-1-(2-naphthyl)-1,3-butandion dotierten Silicatpartikeln**

Der Eu(III)-tris-4,4,4-trifluoro-1-(2-naphthyl)-1,3-butandion-Komplex wurde gemäß der Vorschrift von Charles, R.G., und Roedel, E.P., J. Inorg. Nucl. Chem. 29 (1967) 715-723, hergestellt.

a) Gleichzeitige Zugabe von Alkoxid und einer Mischung aus polyhalogeniertem Alkylalkoxysilan und halogen-haltigem Zielmolekül.

Zu einer auf 30°C temperierten Lösung aus 61 ml Wasser, 40 ml Ethanol und 14 ml Ammoniumhydroxidlösung wurden 20 ml TEOS und eine Mischung aus 20 mg Tris-[4,4,4-Tritluoro-1-(2-naphthyl)-1,3-butandion]-Eu(III), 1 ml Dichlormethan und 0.25 ml 3,3,3-Trifluorpropyltrimethoxysilan gegeben. Die Reaktionsmischung wurde 4 Stunden bei 30°C und weitere 10 h bei Raumtemperatur gerührt. Zur Aufreinigung wurden die Partikel abzentrifugiert und zunächst in Ethanol und im anschließenden Waschschritt in Wasser redispergiert.
Einbaurate (an Komplex): 4.9 $\mu$mol/g $SiO_2$
berechneter Eu-Gehalt: 0.07%
mittels Röntgen-Fluoreszenz-Analyse (RFA) gefundener Eu-Gehalt: 0.05%
Partikelgröße aus TEM: 130-158 nm

b) Sukzessive Zugabe von Alkoxid und einer Mischung aus polyhalogeniertem Alkylsiden und halogen-haltigem Zielmolekül.

In einem 250 ml Rundkolben wurden 61 ml Wasser und 40 ml Ethanol auf 30°C temperiert. Dann wurden 14 ml Ammoniaklösung und 10 ml TEOS zugegeben. Parallel dazu löst man 19.4 mg (20.4 $\mu$mol) Tris-[4,4,4-Trifluoro-1-(2-naphthyl)-1,3-butandion]-Eu(III) in 1 ml Dichlormethan und versetzt die Lösung im Ultraschallbad mit 250 $\mu$l Trifluorpropyltrimethoxysilan. Nach 5 Minuten wurde die Lösung zum Ansatz getropft und für weitere 5 Minuten gerührt. Anschließend wurden nochmals 10 ml TEOS zugegeben und die Reaktionsmischung für 4 Stunden bei 30°C und für weitere 10 Stunden bei Raumtemperatur gerührt. Die Aufreinigung findet über mehrere Waschzyklen mit Ethanol und Wasser statt.

**2.4 Herstellung des Erbium (III) tris- (2,2'-bipyridyl)-trichlorid-Komplexes**

In 60 ml Methanol wurden 1.1 g (7 mmol) 2,2'-Bipyridin und 250 mg (0.7 mmol) Erbium (III) nitrat (als undefinierter Hydrat-Komplex) gegeben. Die Reaktionsmischung wurde für 2h unter starkem Rühren auf 60°C erhitzt. Beim Abkühlen fällt der Komplex als gelbliches Pulver aus.
Der Einbau in Silikat-Partikel erfolgte, wie in Beispiel 2.3a beschrieben.

**2.5 Herstellung des Terbium (III) tris- (2,2'-bipyridyl)-trichlorid-Komplexes**

In 60 ml Methanol wurden 1.47 g (9.43 mmol) 2,2'-Bipyridin und 250 mg (9.43* $10^{-4}$ mol) Terbium(III)chlorid Hexahydrat gegeben. Die Reaktionsmischung wurde für 2h unter starkem Rühren auf 60°C erhitzt. Beim Abkühlen fällt der Komplex als gelbliches Pulver aus.
Der Einbau in Silikat-Partikel erfolgte, wie in Beispiel 2.3a beschrieben.

**2.6 Herstellung des Terbium (III) tris-(1,10-phenanthrolin)-trichlorid-Komplexes**

In 20 ml Methanol wurden 482 mg (2.67 mmol) 1,10-Phenanthrolin und 250 mg (0.94 mmol) Terbium(III)chlorid Hexahydrat gegeben. Die Lösung wurde bei 60°C für 2h gerührt und anschließend langsam auf Raumtemperatur (über Nacht) abgekühlt. Die so erhaltene gelbe Lösung wurde mit n-Pentan überschichtet. Der Komplex fällt als Pulver aus.
Der Einbau in Silikat-Partikel erfolgte, wie in Beispiel 2.3a beschrieben.

**2.7 Zusammenstellung über das Einbauverhalten verschiedener Farbstoffe in unmodifizierte bzw. halogen-modifizierte Silikatpartikel**

| | Einbau in | |
|---|---|---|
| Einbau von | normale Si-NP | fluorierte Si-NP |
| fluorfreien Farbstoffen | ⊖ Tb(III)-bipy<br>⊖ Er(III)-bipy<br>⊖ Tb(III)-phen | ⊖ Tb(III)-bipy<br>⊖ Tb(III)-phen |
| fluorierten bzw. halogenierten Farbstoffen | ⊖ Eu(NTA)$_3$<br>⊖ LCR 640 | ⊕ Eu(NTA)$_3$<br>⊕ Er(NTA)$_3$<br>⊕ LCR 640 |
| Legende:<br>⊖ Einbau negativ,<br>⊕ Einbau positiv<br>bipy = $\alpha,\alpha'$-Bispyridin<br>phen = 1,10-Phenanthrolin | | |

## Beispiel 3:

**Oberflächenmodifizierung mit GF20 (Vorschrift zur Einführung von Carboxylgruppen)**

Die in Beispiel 2.1 bzw. 2.2 erhaltene Dispersion sollte einen pH-Wert von 9.0 nicht überschreiten. Gegebenenfalls sind weitere Waschzyklen durchzuführen (abzentrifugieren / redispergieren). Zu der resultierenden ethanolischen Dispersion mit einem Volumen von 250 ml wurden unter starkem Rühren 210 $\mu$l (75.4*10-5 mol) 2-(3-Triethoxysilylpropyl)-Bernsteinsäureanhydrid (GF20) zugegeben. Die Reaktionslösung wurde 15 h bei 40 °C gerührt. Zur Aufreinigung wurden die Partikel abzentrifugiert und in Wasser redispergiert. Dieser Reinigungsschritt wurde noch zweimal wiederholt. Man erhält eine wässrige Dispersion oberffächenmodifizierter Partikel mit einem Belegungsgrad von ca. 2 $CO_2$H-Gruppen / nm$^2$ Partikeloberfläche.

## Beispiel 4:

**Herstellung von Konjugaten aus mit Lightcycler Red 640 gefärbten Silikatpartikeln und Anti-Digoxigenin-Antikörpern (<Dig>-Konjugate)**

10 mg Silikatpartikel (0,5 ml 2%-ige Suspension) wurden 30 min. bei 15000 upm zentrifugiert. Der Überstand wurde abgenommen und das Pellet wurde in 1 ml 2 mM MES-Puffer pH 6.5 resupendiert. Dieser Waschvorgang wurde noch einmal wiederholt. Anschließend wurden 100 $\mu$l 100 mM MES-Puffer pH 6.5, 100 $\mu$l 2% (w/v) Sulfo-N-Hydroxysuccinimid (S-NHS; Pierce No. 24510) in MES-Puffer pH 6.5 und 100 $\mu$l 0.2% (w/v) 1-Ethyl-3-(3-diamino-propyl) carbodiimid-hydrochlorid (EDC; Pierce No. 22980ZZ) in MES-Puffer pH 6.5 zugegeben. Nach 20 min. Inkubationszeit auf dem Rolleninkubator wurde 30min. bei 15000 upm zentrifugiert und der Überstand abgehoben. Das Pellet wurde in 867 $\mu$l 2mM MES-Puffer pH 6.5 redispergiert, 133 $\mu$l MAK<Dig>M-IgG-Lösung (monoklonaler Anti-Digoxigenin-IgG-Antikörper aus der Maus; Konzentration = 15mg/ml) wurden zugegeben. Danach wurde 2 h bei Raumtemperatur (RT) inkubiert.Anschließend wurde 1 ml einer 2%igen Lösung von Rinderplasmaalbumin (RPLA) in 5 mM Kaliumphosphatpuffer pH 7.4 zugegeben und weitere 60 min bei RT inkubiert. Die Partikel-Konjugate wurden zentrifugiert, der Überstand wurde abgenommen und das Pellet wurde in 1 ml 5 mM Puffer resuspendiert. Der Kaliumphosphat Waschvorgang wurde zweimal wiederholt und nach dem letzten Zentrifugationsschritt wurden die Partikel in 0.5 ml 2% RPLA in 5 mM Hepes-Puffer pH 7.4 resuspendiert.

## Beispiel 5:

**Anwendung von <Dig>-Silikatpartikelkonjugaten in einem Streifentest**

Die für die Durchführung der Experimente benötigten Prüfteststreifen bestehen aus einer Kunststofffolie, auf die ein Auftragvlies, eine Membran sowie ein Saugvlies aufgeklebt sind. Auf der Membran sind zwei Proteine auf unterschiedlichen Strichen immobilisiert: Streptavidin bzw. Anti-Maus-IgG Antikörper.

Poly-SA wurde auf der Target- oder Resultatlinie, das heißt der ersten Linie in Chromatographierichtung immobilisiert, und soll über die Bindung von Biotin spezifisch an digoxigenyliertes und biotinyliertes Peptid gebundene Partikel abfangen. Die Anti-Maus-IgG Antikörper wurden auf der Kontroll-Linie, das heißt der zweiten Linie in Chromatographierichtung, immobilisiert. Diese Anti-Maus-IgG Antikörper sollen alle überschüssigen, nicht auf der Resultatlinie gebundenen Partikel (Konjugate aus Anti-Digoxigenin-Antikörpern aus der Maus und den Silikatpartikeln) abfangen.

Das Auftragvlies wurde je nach Teststreifenvariante mit dem zu untersuchenden Probenmaterial, das heißt mit 1 $\mu$g/ml bzw. 0 $\mu$g/ml eines biotinylierten und digoxigenylierten Peptids getränkt. Zum Verdünnen der Silikatpartikel bzw. zum Nachwaschen der Teststreifen wurde ein 100mM Hepes-Puffer pH 7.5 (50 mM NaCl, 70 mM Harnstoff, 1 mM EDTA, 2% RPLA) verwendet. Die Silikatpartikel wurden im Hepes-Puffer auf eine Endkonzentration von 100 $\mu$g/ml verdünnt.

Anschließend wurden 60 $\mu$l der beschriebenen Silikatpartikelverdünnung auf das Reagenzvlies pipettiert und 10min. chromatographiert. Danach wurden 40 $\mu$l Hepes-Puffer auf das Reagenzvlies pipettiert und weitere 10 min. chromatographiert. Abschließend wurde der Teststreifen ausgewertet. In Abwesenheit des Peptids (=Analyt) war nur die Kontroll-Linie zu erkennen, in Anwesenheit des Peptids wurde zusätzlich die Resultatlinie-Linie sichtbar.

Die erfindungsgemäßen Konjugate aus mit halogenhaltigen Farbstoffen gefärbten Silikatpartikeln und Biomolekülen (hier: Anti-Digoxigenin-Antikörpern) sind somit als Nachweisreagenzien in immunologischen Teststreifen geeignet.

Referenzliste

Badley, R.D., et al., Langmuir 6 (1990) 792-801
Byers, C. H., et al., Ind. Eng. Chem. Res. 26 (1987) 1916-1923
Charles, R.G., und Roedel, E.P., J. Inorg. Nucl. Chem. 29 (1967) 715-723
EP 1036 763
Fendler, J.H., Nanoparticles and Nanostructured Films, Wiley-VCH 1998, 180-183
Giesche, H., and Matijevic, E., Dyes and Pigments 17 (1991) 323-340
Giesche, H., J. European Ceramic Soc. 14 (1994) 189-204
Harris, T., et al., J. Non-Cryst. Solids 121 (1990) 307-403
Horn, D., and Rieger, J., Angew. Chem. 113 (2001) 4460-4492
Kawaguchi, H., Prog. Polym. Sci. 25 (2000) 1171-1210
Kron, J., et al., 2. Wörlitzer Workshop, Tagungsband 2000
Matijevic, et al., Dyes and Pigments 17 (1991) 323-340
Matsoukas, T., and Goulari, E., Colloid J. Interface Sci. 124 (1988) 252-261
Matsoukas, T., and Gulari, E., Colloid J. Interface Sci. 132 (1989) 13-21
Philipse, A.P., and Vrij, A., Colloid J. Interf. Sci. 12 (1989) 121-136
Quellet, et al., Colloid J. Interface Sci. 159 (1993) 150-7
Reisfeld, R., et al., J. of Alloys and Compounds 300-301 (2000), 147-151
Schwert, R., Dissertation, Würzburg (?)2000
Shibata, S., et al., J. Sol-Gel Sci. and Techn. 10 (1997) 263-268
Stöber, et al., Colloid J. Interface Sci. 26 (1968) 62-69
US 5,102,763
US 5,209,998
Van Blaaderen, A., and Vrij, A., Adv. Chem. Ser. 234 (1994) 83-111
Van Blaaderen, A., and Vrij, A., Colloid J. Interface Sci., 156 (1993) 1-18
Van Blaaderen, et al., Langmuir 8 (1992) 2921-2931
Van Helden, A.K., and Vrij, A., Colloid J. Interf. Sci. 81 (1981) 354-368
Verhaegh, and Van Blaaderen, A., Langmuir 10 (1994) 1427-1438
WO 93/10190

**Patentansprüche**

**1.** Sol-Gel-Verfahren zur Herstellung eines mindestens ein halogen-haltiges Zielmolekül enthaltenden Metalloxid-Partikels, enthaltend die Stufen

a) Herstellung einer Mischung enthaltend das Zielmolekül und eine polyhalogenierte Metallalkylalkoxy-Verbindung,

b) Start des Sol-Gel-Prozesses mit der Metalloxid-Vorstufe,
c) Zugabe der Lösung aus a),
d) optional weitere Zugabe der Metalloxid-Vorstufe und
e) Beendigung des Sol-Gel-Prozesses

2. Verfahren gemäß Anspruch 1, **dadurch gekennzeichnet, dass** in Schritt a) 90 bis 10% der Metallalkoxid-Vorstufe und in Schritt d) 10 bis 90% der Metalloxid-Vorstufe eingesetzt werden.

3. Verfahren gemäß einem der Ansprüche 1 bis 2, **dadurch gekennzeichnet, dass** bezogen auf die Ausgangsmenge an Metalloxid-Vorstufe zwischen 0,04 und 0,4 Mol-% an polyhalogenierter Metallalkylalkoxy-Verbindung eingesetzt werden.

4. Verfahren gemäß einem der Ansprüche 1 bis 3, **dadurch gekennzeichnet, dass** bezogen auf die Ausgangsmenge an Metalloxid-Vorstufe zwischen 0,1 und 10 Gew.-% an Zielmolekül eingesetzt werden.

5. Verfahren gemäß einem der Ansprüche 1 bis 4, **dadurch gekennzeichnet, dass** das halogen-haltige Zielmolekül chloriert oder fluoriert ist.

6. Verfahren gemäß einem der Ansprüche 1 bis 5, **dadurch gekennzeichnet, dass** das Metalloxid aus $B_2O_3$, $Al_2O_3$, $SiO_2$, $ZrO_2$ oder $TiO_2$ oder aus Mischoxiden daraus besteht.

7. Metalloxid-Partikel erhältlich nach dem Sol-Gel-Verfahren gemäß einem der Ansprüche 1 bis 6.

8. Verwendung eines Partikels gemäß Anspruch 7 als Markierung für Biomoleküle.

9. Verwendung eines Partikels gemäß Anspruch 7 als Sonnenschutzmittel.

10. Verwendung eines Partikels gemäß Anspruch 7 als Toner.

11. Verwendung eines Partikels gemäß Anspruch 7 als Insektizid.

**Claims**

1. Sol-gel process for producing a metal oxide particle containing at least one halogen-containing target molecule, comprising the steps

a) production of a mixture containing the target molecule and a polyhalogenated metal alkylalkoxy compound,
b) starting the sol-gel process with the metal oxide precursor,
c) adding the solution from a),
d) optionally further addition of the metal oxide precursor and
e) ending the sol-gel process.

2. Process as claimed in claim 1, **characterized in that** 90 to 10 % of the metal alkoxide precursor is used in step a), and 10 to 90 % of the metal oxide precursor is used in step d).

3. Process as claimed in one of the claims 1 to 2, **characterized in that** based on the initial amount of metal oxide precursor between 0.04 and 0.4 mol % polyhalogenated metal alkylalkoxy compound is used.

4. Process as claimed in one of the claims 1 to 3, **characterized in that** based on the initial amount of metal oxide precursor between 0.1 and 10 % by weight target molecule is used.

5. Process as claimed in one of the claims 1 to 4, **characterized in that** the halogen-containing target molecule is chlorinated or fluorinated.

6. Process as claimed in one of the claims 1 to 5, **characterized in that** the metal oxide is composed of $B_2O_3$, $Al_2O_3$, $SiO_2$, $ZrO_2$ or $TiO_2$ or mixed oxides thereof.

**7.** Metal oxide particle obtainable by the sol-gel process as claimed in one of the claims 1 to 6.

**8.** Use of a particle as claimed in claim 7 as a label for biomolecules.

**9.** Use of a particle as claimed in claim 7 as a sunscreen agent.

**10.** Use of a particle as claimed in claim 7 as a toner.

**11.** Use of a particle as claimed in claim 7 as an insecticide.


**Revendications**

**1.** Procédé sol-gel pour la préparation d'une particule d'oxyde de métal, contenant au moins une molécule cible contenant halogène, présentant les étapes de

   a) préparation d'un mélange contenant la molécule cible et un composé métalalkylalcoxy polyhalogéné,
   b) démarrage du procédé sol-gel avec le précurseur d'oxyde de métal,
   c) addition de la solution provenant de a)
   d) éventuellement une nouvelle addition du précurseur d'oxyde de métal et
   e) achèvement du processus sol-gel.

**2.** Procédé selon la revendication 1, **caractérisé en ce que** dans l'étape a), on utilise 90 à 10% du précurseur d'alcoxyde de métal et dans l'étape d) 10 à 90% du précurseur d'oxyde de métal.

**3.** Procédé selon l'une quelconque des revendications 1 à 2, **caractérisé en ce qu'**on utilise, par rapport à la quantité de départ de précurseur d'oxyde de métal, entre 0,04 et 0,4% en mole de composé métalalkylalcoxy polyhalogéné.

**4.** Procédé selon l'une quelconque des revendications 1 à 3, **caractérisé en ce qu'**on utilise, par rapport à la quantité de départ de précurseur d'oxyde de métal, entre 0,1 et 10% en poids de molécule cible.

**5.** Procédé selon l'une quelconque des revendications 1 à 4, **caractérisé en ce que** la molécule cible contenant halogène est chlorée ou fluorée.

**6.** Procédé selon l'une quelconque des revendications 1 à 5, **caractérisé en ce que** l'oxyde de métal est constitué par $B_2O_3$, $Al_2O_3$, $SiO_2$, $ZrO_2$ ou $TiO_2$ ou par des oxydes mixtes de ceux-ci.

**7.** Particule d'oxyde de métal pouvant être obtenue selon le procédé sol-gel selon l'une quelconque des revendications 1 à 6.

**8.** Utilisation d'une particule selon la revendication 7 comme marquage pour des biomolécules.

**9.** Utilisation d'une particule selon la revendication 7 comme agent de protection solaire.

**10.** Utilisation d'une particule selon la revendication 7 comme toner.

**11.** Utilisation d'une particule selon la revendication 7 comme insecticide.

## Fig. 1

Typ 1        Typ 2        Typ 3

## Fig. 2

# Fig. 3

**Fig. 4**

**Fig. 5**

**Fig. 6**

**Fig. 7**

Fig. 8

600 nm

200 nm

EP 1 483 203 B1

Fig. 9

13C VACP/MAS von Dragan - Eu3
v rot = 5000 Hz

129.4265
126.7702

61.2119

32.1063
27.6604
22.6870
17.4122

4.5078

190  180  170  160  150  140  130  120  110  100  90  80  70  60  50  40  30  20  10  0  -10  -20  -30
(ppm)

EP 1 483 203 B1

EP 1 483 203 B1

Fig. 10

29Si quantitativ von Dragan – Eu3
v rot = 5000 Hz

-110.6800
-101.0527
-90.9986

(ppm)